# EUROPEAN PATENT APPLICATION

(11) **EP 2 120 454 A1**
(43) Date of publication of application: **18.11.2009**
(21) Application number: 08164729.9
(22) Date of filing: 19.09.2008
(51) Int. Cl.: H04N 5/64

(54) **Flat panel display**

(30) Priority: 12.05.2008 CN 200820047634 U; 25.06.2008 CN 200820124851 U
(71) Applicant: Guangzhou Echom Science & Technology Co., Ltd., Guangzhou City, Guangdong 510663 (CN)
(72) Inventor: XIE, Feipeng, GUANGZHOU ECHOM SCIENCE & TECHNOLOGY CO., LTD., Guangzhou City, Guangdong 510663 (CN)
(74) Representative: Mittler, Enrico

(57) **Abstract**

A flat panel display capable of being repaired more easily is disclosed. The flat panel display comprises a main display body having a display panel and a backplate; a connection box having connectors; wherein the main display body is provided with a cavity for disposing the connection box and conversion connectors electrically connected with a main control board, the cavity has an opening facing towards a side of the main display body, the connectors are connected with the conversion connectors after the connection box is inserted into the cavity along a direction parallel to the backplate. The flat panel display is convenient for repairing, and reduces the repair costs. (Fig. 4)

## Description

### TECHNICAL FIELD

The present invention relates to a flat panel display product, in particular to a flat panel display capable of being repaired more easily.

### BACKGROUND OF THE INVENTION

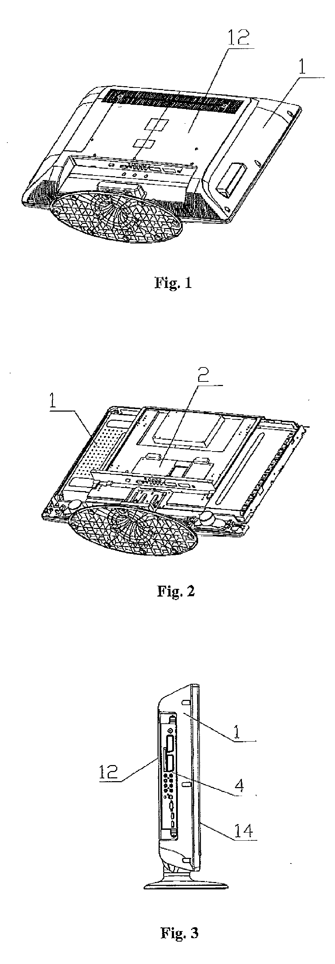

As shown in Figs. 1 and 2, in a known flat panel display, the main display body 1 is assembled with an integrated circuit board 2, a hard disk, or a DVD, etc, after which a backplate 12 is covered and fixed on the main display body 1 by bolts. This structure is of the following defects:
1). Normally, a warning mark is arranged on the back of the flat panel display, whereby users are forbidden from disassembling and repairing the flat panel display by themselves, and if the integrated circuit board 2 doesn't work, the users have to carry the whole flat panel display to the repair station, which costs a lot in transportation.
2). If on-site repair service, the cost of maintenance personnel will also increase.
3). When repairing, the maintenance personnel has to remove the backplate 12, and then take off the integrated circuit board 2 for repairing; this operation is complicated, and if the flat panel display is of large dimension or hung on the wall, the disassembly becomes more complicated.
4). When the integrated circuit board 2 is to be upgraded, the users would encounter the similar problems.

### SUMMARY OF THE INVENTION

Therefore, it is an objective of the present invention to provide a flat panel display which is more convenient for repairing.

To achieve the above objective, the present invention provides a flat panel display which includes a main display body having a display panel and a backplate, and a connection box having connectors. The main display body is provided with a cavity for disposing the connection box and conversion connectors electrically connected with the main control board, the cavity has an opening facing towards the side of the main display body, the connectors are connected with the conversion connectors after the connection box is inserted into the cavity along a direction parallel to the backplate.

Preferably, an integrated circuit board or a hard disk or a DVD or a card reader may be mounted inside the connection box and electrically connected to the connector. If the integrated circuit board or the hard disk or the DVD or the card reader doesn't work, the users may withdraw the connection box from the cavity and only send the connection box instead of the whole flat panel display to the repair station, which is more convenient for repairing and reduces the costs of transportation, and it is unnecessary for the maintenance personnel to unscrew the bolts on the main display body. For the integrated circuit board is protected inside the connection box, the integrated circuit board will not be damaged during disassembly, and it is easy for the users to disassemble it without the need of training. During the disassembly or assembly process, no bolt is required. More importantly, the opening of the cavity faces towards the side of the main display body, and if the display is to be upgraded when the display is mounted on the wall, it is unnecessary to take the display down from the wall, and the connection box may be taken off directly from the side (left side or right side or upside or underside) of the display. Therefore, the repairing or upgrading is very convenient.

Preferably, the conversion connectors are provided at the bottom of the cavity, and the connectors are correspondingly provided at the end of the connection box. For the connection box is inserted into the cavity with the arrangement that the connectors being easily coupled with the conversion connectors, dust is prevented from entering into the conversion connector.

Preferably, the opening of the cavity faces towards the left side or right side or upside or underside of the main display body. More preferably, the opening faces towards the left or right side of the main display body, because if it is arranged on the upside, dust will fall into the cavity easily which affects the performance of the display, and if it is on the underside of the main display body, the connection box may slide downwards due to gravity which may affect the coupling between the connector and the conversion connector.

Preferably, a guide rail and a corresponding guide groove are provided between the opposite sides of the main display body and the connection box, which ensures the stably insert of the connection box into the cavity.

Preferably, the cavity or the connection box is provided with three mounting holes, the guide rail or the guide groove is provided at both ends with two elastic buckle pieces extending lengthways in the same direction, an elastic blocking piece is provided between the two elastic buckle pieces, and when the two elastic buckle pieces clasp into two mounting holes on the two ends, the elastic blocking piece is blocked in the middle mounting hole. That is to say, the connection structure between the cavity and the connection box does not require bolts. When assembly, the two elastic buckle pieces clasp into the two mounting holes on the two ends, the elastic blocking piece is blocked in the middle mounting hole to prevent the two elastic buckle pieces from withdrawing from the two mounting holes, and thus firm connection is realized. During disassembly, the elastic blocking piece may be forced to withdraw from the middle mounting hole by an outside pressure, and then the two elastic mounting holes may be withdrawn by sliding them with respect to the mounting holes.

Preferably, a clamping structure is provided between the main display body and the connection box. After the connection box is inserted into the cavity, the clamping structure retains the connection box to prevent the connection box from withdrawing from the cavity.

Preferably, one of the main display body and the connection box is provided with positioning holes, while the other of the main display body and the connection box is provided with elastic clamping protrusions that cooperate with the positioning holes to form the clamping structure. During the assembly, the elastic clamping protrusions are deformed to buckle into the positioning holes to position the connection box, and the connection box may be taken out by pressing the elastic clamping protrusions inwards to withdraw from the positioning holes.

Preferably, the quantity of the elastic clamping protrusions and the quantity of the positioning holes are both two, the two elastic clamping protrusions are arranged on two opposite sides of the connection box, and a drawing portion is provided on each of the two elastic clamping protrusions. If the connection box is to be removed, the two elastic clamping protrusions may be pressed to withdraw from the positioning holes, and thus the connection box may be drawn out by drawing at the two drawing portions.

Preferably, a signal port electrically connected with the connector is provided on the side of the connection box. Various signals may be input into the display through the signal port. When the signal port is damaged, the user only has to bring the connection box for repairing.

### BRIEF DESCRIPTION OF THE DRAWING

Fig. 1 is a perspective view of a known flat panel display;
Fig. 2 is a perspective view of the known flat panel display after the backplate is removed;
Fig. 3 is a side view of a flat panel display according to an embodiment of the present invention;
Fig. 4 is a structural view of the flat panel display according to the embodiment of the present invention, after the backplate is removed;
Fig. 5 is a structural view of the flat panel display according to the embodiment of the present invention, after the connection box is removed;
Fig.6 is a structural view of the connection box;
Fig.7 is a schematic view showing the fitting of the guide rail and the guide groove;
Fig.8 is a structural view of the connection box after the upper cover is removed;
Fig.9 is a detailed view of the "A" portion in the Fig.7;

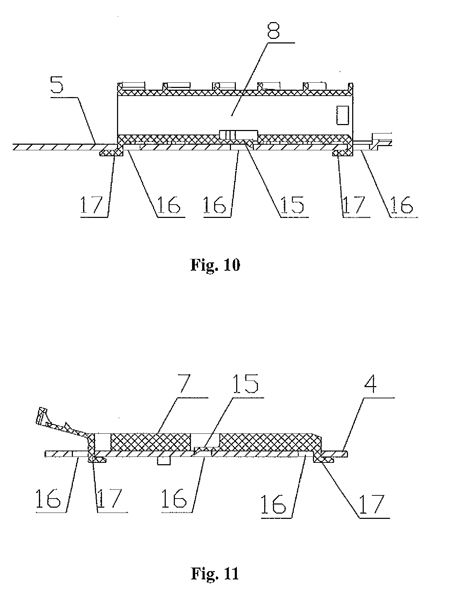

Fig. 10 is a structural view showing the assembly of the guide groove in the cavity;
Fig. 11 is a structural view showing the assembly of the guide rail and the connection box.

1. Main display body; 2. Integrated circuit board; 3. Connector; 4. Connection box; 5. Cavity; 6. Conversion connector; 7. Guide rail; 8. Guide groove; 9. Positioning hole; 10. Elastic clamping protrusion; 11. Drawing portion; 12. Backplate; 13. Signal port; 14. Display panel; 15. Elastic blocking piece; 16. Mounting hole; 17. Elastic buckle piece.

### DETAILED DESCRIPTION OF THE INVENTION

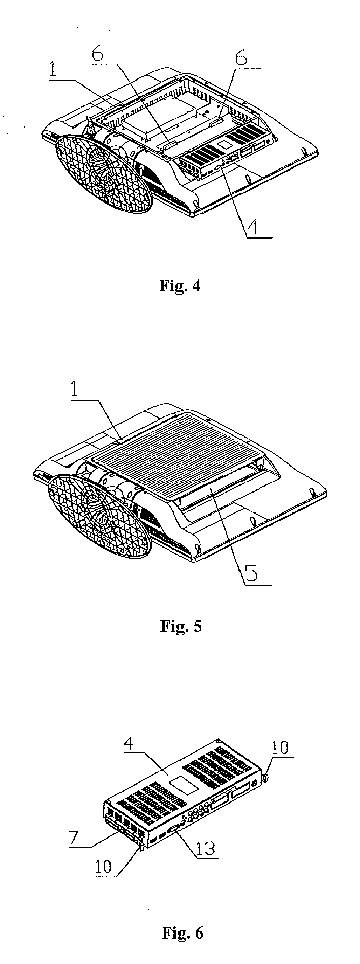

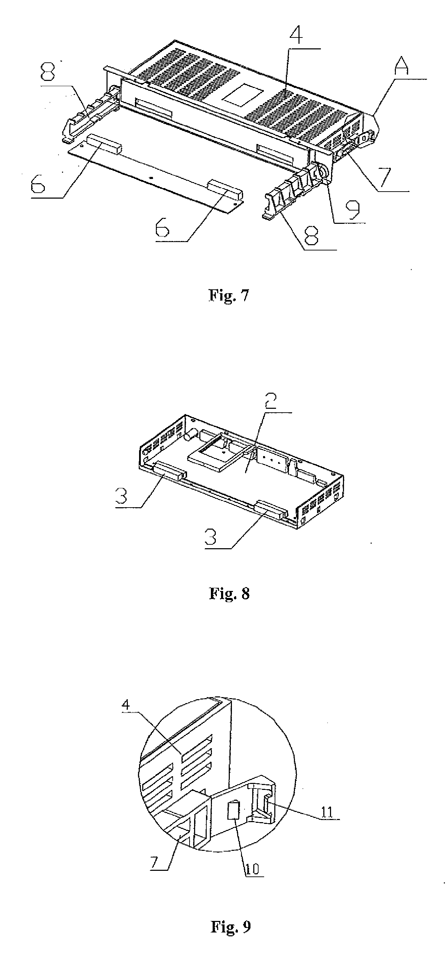

Referring to Figs. 3 to 9, a flat panel display includes a main display body 1 and a connection box 4. The main display body 1 has a display panel 14 in the front side and a backplate 12 in the rear side. The connection box 4 is provided with connectors 3.The main display body 1 is provided with a cavity 5 for disposing the connection box 4 and conversion connectors 6 electrically connected with the main control board (not shown). The cavity 5 has an opening facing towards the side of the main display body 1. The connectors 3 are connected with the conversion connectors 6 when the connection box 4 is inserted into the cavity 5 along a direction parallel to the backplate 12.

The opening of the cavity 5 may be opened towards the left or right of the main display body 1. The conversion connectors 6 are arranged at the bottom of the cavity 5, while the connectors 3 are provided at the end of the connection box 4. The cavity 5 and the connection box 4 are both provided with three mounting holes 16. The guide rail 7 and the guide groove 8 are provided, at both ends, with two elastic buckle pieces 17 extending lengthways in the same direction. An elastic blocking piece 15 is provided between the two elastic buckle pieces 17, and when the two elastic buckle pieces 17 clasp into two mounting holes 16 on the two ends, the elastic blocking piece 15 is blocked in the middle mounting hole 16. An integrated circuit board 2 is mounted inside the connection box 4, and a signal port 13 is provided on the side of the connection box 4, and the integrated circuit board 2 and the signal port 13 are both electrically connected with the connectors 3. The guide rails 7 and the guide grooves 8 which are fitted each other are provided between the opposite sides of the main display body 1 and the connection box 4. A clamping structure is provided between the main display body 1 and the connection box 4, the clamping structure comprises: an elastic clamping protrusion 10 is provided on each of the two opposite sides of the connection box 4, and the main display body 1 is provided with positioning holes 9 corresponding to the elastic clamping protrusions 10, and the two elastic clamping protrusions 10 both have a drawing portion 11.

If the integrated circuit board 2 is failure when the flat panel display is in use, the connection box 4 containing the integrated circuit board 2 can be drawn out from the cavity 5 for repairing, rather than the whole flat panel display should be sent to the repair station in the past. This is more convenient for repairing, which reduces the cost of transportation and labour cost, and when repairing, it is unnecessary to unfasten the bolts on the back of the display. Since the integrated circuit board 2 is protected inside the connection box 4, the integrated circuit board 2 will not be damaged during disassembly, and it is also unnecessary to train the user for disassembly. During the disassembly or assembly process, no bolt is required. More importantly, the opening of the cavity 5 faces towards the side of the main display body 1, and if the display should be upgraded when the display is mounted on the wall, it is unnecessary to take the display down from the wall, and the connection box 4 may be taken off directly from the side (left side or right side) of the display. Therefore, the repairing or upgrading is very convenient. During the assembly of the product, the guide groove 8 is fixed inside the cavity 5, and the guide rail 7 is fixed on the connection box 4, without the using of bolts, but via the mounting holes 16, the elastic buckle piece 17, and the elastic blocking piece 15.

## Claims

1. A flat panel display, **characterized by** comprising:
a main display body having a display panel and a backplate;
a connection box having connectors;
wherein the main display body is provided with a cavity for disposing the connection box and conversion connectors electrically connected with a main control board, the cavity has an opening facing towards a side of the main display body, the connectors are connected with the conversion connectors after the connection box is inserted into the cavity along a direction parallel to the backplate.

2. The flat panel display of claim 1, **characterized in that** the conversion connectors are provided at the bottom of the cavity, and the connectors are correspondingly provided at the end of the connection box.

3. The flat panel display of claim 1, **characterized in that** the opening of the cavity faces towards the left side or right side or upside or underside of the main display body.

4. The flat panel display of claim 1, **characterized in that** a guide rail and a corresponding guide groove are provided between the opposite sides of the main display body and the connection box.

5. The flat panel display of claim 4, **characterized in that** the cavity or the connection box is provided with a middle mounting hole and two end mounting holes, the guide rail or the guide groove is provided at both ends with two elastic buckle pieces extending lengthways in the same direction, an elastic blocking piece is provided between the two elastic buckle pieces, and when the two elastic buckle pieces clasp into two end mounting holes, the elastic blocking piece is blocked in the middle mounting hole.

6. The flat panel display of claim 1, **characterized in that** a clamping structure is provided between the main display body and the connection box.

7. The flat panel display of claim 6, **characterized in that** one of the main display body and the connection box is provided with positioning holes, while the other of the main display body and the connection box is provided with elastic clamping protrusions that cooperate with the positioning holes to form the clamping structure.

8. The flat panel display of claim 7, **characterized in that** the quantity of the elastic clamping protrusions and the quantity of the positioning holes are both two, the two elastic clamping protrusions are arranged on two opposite sides of the connection box, and a drawing portion is provided on each of the two elastic clamping protrusions.

9. The flat panel display of any one of claims 1 to 8, **characterized in that** an integrated circuit board or a hard disk or a DVD or a card reader is mounted inside the connection box and electrically connected to the connectors.

10. The flat panel display of any one of claims 1 to 8, **characterized in that** a signal port electrically connected with the connector is provided on the side of the connection box.
